# EUROPEAN PATENT APPLICATION

(11) **EP 4 290 446 A1**
(43) Date of publication of application: **13.12.2023**
(21) Application number: 22756491.1
(22) Date of filing: 16.02.2022
(51) Int. Cl.: G06Q 50/10, G06Q 30/06, H04N 21/466, H04N 21/45

(54) **METHOD FOR PROVIDING RECOMMENDED CONTENT, AND SERVER AND ELECTRONIC DEVICE THEREFOR**

(30) Priority: 16.02.2021 KR 20210020717
(71) Applicant: Samsung Electronics Co., Ltd., Suwon-si, Gyeonggi-do 16677 (KR)
(72) Inventor: LEE, Chungki, Suwon-si, Gyeonggi-do 16677 (KR); MIN, Hwangki, Suwon-si, Gyeonggi-do 16677 (KR); PARK, Jinah, Suwon-si, Gyeonggi-do 16677 (KR); KIM, Sunbal, Suwon-si, Gyeonggi-do 16677 (KR); KIM, Hyunjoong, Suwon-si, Gyeonggi-do 16677 (KR); NAM, Yoonyoung, Suwon-si, Gyeonggi-do 16677 (KR); PARK, Sojung, Suwon-si, Gyeonggi-do 16677 (KR); BAE, Chunki, Suwon-si, Gyeonggi-do 16677 (KR); SHRIVASTAVA, Anubhav, Suwon-si, Gyeonggi-do 16677 (KR); AHN, Jeongmin, Suwon-si, Gyeonggi-do 16677 (KR); YOO, Seungyeol, Suwon-si, Gyeonggi-do 16677 (KR); YOON, Seokho, Suwon-si, Gyeonggi-do 16677 (KR); LEE, Yuwon, Suwon-si, Gyeonggi-do 16677 (KR); CHOI, Sunook, Suwon-si, Gyeonggi-do 16677 (KR); SONG, Gajin, Suwon-si, Gyeonggi-do 16677 (KR); YEO, Jaeyung, Suwon-si, Gyeonggi-do 16677 (KR)
(74) Representative: HGF
(86) International application number: PCT/KR2022/002296
(87) International publication number: WO 2022/177293

(57) **Abstract**

According to various embodiments, an electronic device comprises: a communication module for communicating with at least one external electronic device; and at least one processor operatively connected to the communication module, wherein the at least one processor may be configured to: acquire information related to a transition between pieces of content for each content category; generate, on the basis of the information related to the transition, a plurality of content sequences indicating pieces of interrelated content in at least one content category; and provide the external electronic device with at least some of the plurality of content sequences, which are used to provide a recommended content sequence in the external electronic device. Other various embodiments can be provided.

## Description

### [Technical Field]

Various embodiments disclosed in this document relate to a method for providing recommended content, and a server and an electronic device therefor.

### [Background Art]

As recommendation of content is currently succeeding in commercialization in various fields such as news, education, history, and entertainment, the scale of content service businesses is also expanding. In line with a change in the perception of content services, users are also willing to pay money and watch (or subscribe to) content. The secret to the success of the content service provider is to make the users watch a large amount of content while being connected to the service for as long as possible through recommended content.

Accordingly, the types of content provided by electronic devices are also diversifying. For example, a user may use an Internet-based video service providing a variety of content such as dramas and movies through the Internet, such as an over-the-top (OTT) service, as well as web content.

### [Detailed Description of the Invention]

### [Technical Problem]

As the types of content provided by electronic devices diversify as described above, users may experience inconvenience in selecting a desired content from among numerous types of content. To this end, electronic devices capable of providing content services based on machine learning are widely available. For example, the electronic device may use a learning model resulting from machine learning in order to provide recommended content to a user.

However, basic recommended content is provided by prediction using personal preferences of a user in the content recommendation method, whereas only fragmentary items are recommended in each field on the basis of machine learning. In addition, detailed information such as the background, history, expertise, and related content of the recommended content is not provided when recommending the content. Therefore, if content unfamiliar to the user is recommended, it may be difficult to provide unfamiliar information, as useful information, to the user only using fragmentary recommended items.

Various embodiments disclosed in this document may provide a method for providing recommended content that may be recommended to a user by correlating content in various fields, and a server and an electronic device therefor.

### [Technical Solution]

An electronic device according to various embodiments may include a communication module configured to communicate with at least one external electronic device and at least one processor operatively connected to the communication module, wherein the at least one processor may be configured to obtain information related to transition between content for each content category, generate a plurality of content sequences representing interrelated content in at least one content category, based on the information related to transition, and provide the external electronic device with at least a portion of the plurality of content sequences used to provide recommended content sequences in the at least one external electronic device.

A method for providing recommended content in a server according to various embodiments may include obtaining information related to transition between content for each content category, generating a plurality of content sequences representing interrelated content in at least one content category, based on the information related to transition, and providing an external electronic device with at least a portion of the plurality of content sequences used to provide recommended content sequences in the external electronic device.

An electronic device according to various embodiments may include a communication module configured to communicate with a server, a display, and at least one processor operatively connected to the communication module and the display, wherein the at least one processor may be configured to receive, from the server, at least a portion of a plurality of content sequences representing interrelated content in at least one content category, sort the at least a portion of content sequences, based on user tendencies, to display the same on the display, and obtain user feedback on content in the content sequences.

### [Advantageous Effects]

According to various embodiments, content in various fields may be correlated and recommended to a user, so that detailed information such as the background, history, expertise, and related content of the recommended content may be provided together when recommending content.

According to various embodiments, an electronic device may provide recommended content in the form of a sequence such that a user is able to conveniently use a plurality of pieces of content in various fields desired by the user.

According to various embodiments, in recommending content corresponding to an unfamiliar topic requiring expertise to a user, recommended content may be provided in the form of sequences of various combinations, thereby lowering entry barriers to difficult topics.

According to various embodiments, an electronic device may obtain user feedback on various combinations of recommended content and provide the same to a server, thereby securing a high-quality recommendation category, enabling accurate personalization in providing content, and making immediate user interactions.

Effects obtainable in the disclosure are not limited to the effects mentioned above, and other effects not mentioned above may be clearly understood by those skilled in the art to which the disclosure pertains from the description below.

### [Brief Description of Drawings]

FIG. 1 is a block diagram of an electronic device in a network environment according to various embodiments.
FIG. 2 is a conceptual diagram illustrating recommended content according to various embodiments.
FIG. 3 is an internal block diagram of an electronic device and a server according to various embodiments.
FIG. 4 is a flowchart illustrating an operation of providing recommended content according to various embodiments.
FIG. 5 is a diagram illustrating an operation of providing recommended content in an electronic device and a server according to various embodiments.
FIG. 6 is a flowchart illustrating an operation in a server for providing recommended content according to various embodiments.
FIG. 7 is an exemplary diagram illustrating a method of combining content belonging to different content categories according to various embodiments.
FIG. 8 is an exemplary diagram illustrating a method of calculating a transition probability between content in at least one content category according to various embodiments.
FIG. 9 is a diagram illustrating a plurality of content sequences including interrelated content according to various embodiments.
FIG. 10 is a flowchart illustrating an operation in an electronic device for providing recommended content reflecting user preferences according to various embodiments.
FIG. 11 is a diagram illustrating a method of providing a final recommended content sequence based on user tendencies from a plurality of content sequences provided from a server according to various embodiments.
FIG. 12 is a diagram illustrating provision of a recommended content sequence reflecting user feedback in an electronic device according to various embodiments.
FIG. 13 is a diagram illustrating provision of a recommended content sequence for each of users according to various embodiments.

In connection with the description of the drawings, the same or similar reference numerals may be used for the same or similar elements.

### [Mode for Carrying out the Invention]

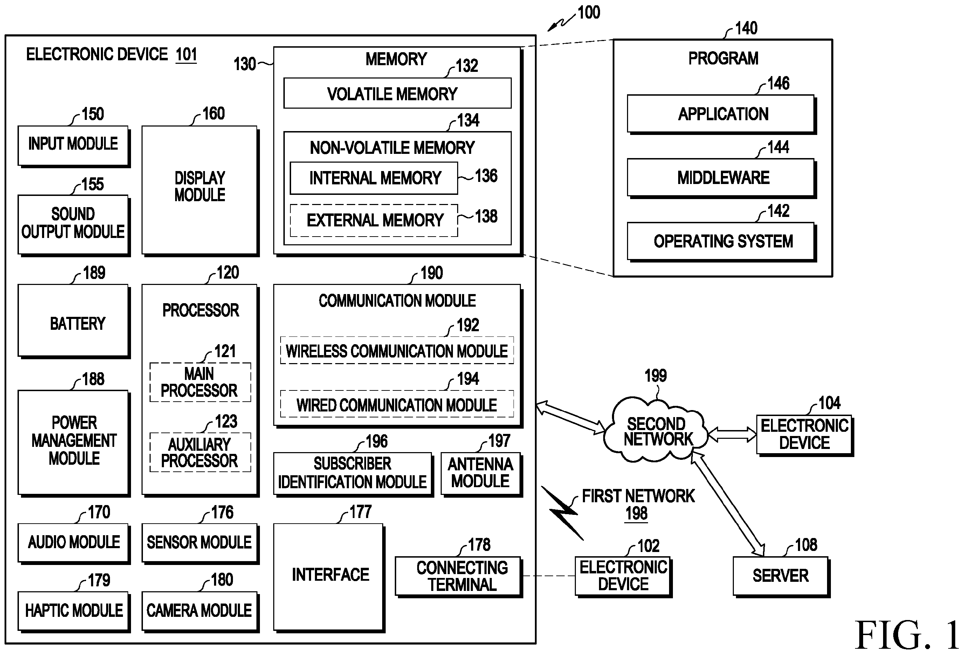

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

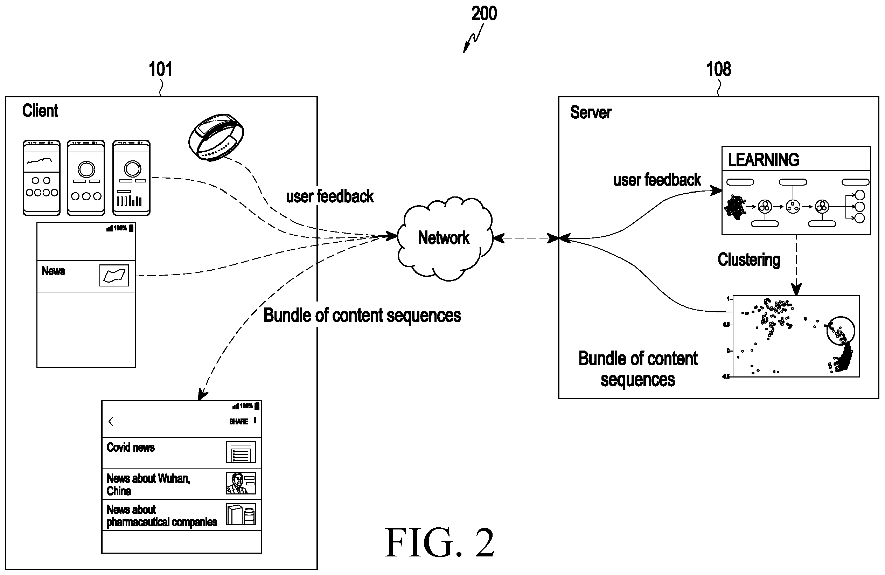

FIG. 2 is a conceptual diagram 200 illustrating recommended content according to various embodiments.

Referring to FIG. 2, a server 108 may include at least one server and include a first server and a second server providing different types of content. For example, each of the first server and the second server may correspond to at least one of a web content providing server, a broadcasting server, an over-the-top (OTT) server, or a streaming server.

In addition, a device that receives user-related recommended content from the server 108 may be referred to as a client 101. The client 101 in FIG. 2 may include configurations that are the same or similar to those of the electronic device 101 in FIG. 1. For example, the client 101 may include at least one of an electronic device (e.g., the electronic device 101 in FIG. 1), a wearable device, or a third party device.

The server 108 may provide user-related recommended content to the client 101, and methods for determining the recommended content may be roughly divided into a content-based filtering method and a collaborative filtering method.

The content-based filtering method is a method of finding an item most related to a user's tendency from among a plurality of recommended items and may be a method of recommending an item through analysis of the item itself. In this case, a profile obtained by analyzing recommended items and a profile obtained by extracting user preferences must be produced and similarity therebetween must be calculated, and a user's preferred content may be provided for a new item, based on the similarity calculated through machine learning. For example, it may be a method of comparing information about personal preferences such as "What movie is the user looking for?", "What movie does he start watching and quickly stop watching?", or "Does he watch a series of movies all at once?" with information obtained by analyzing the background, characters, and genre of the movie. In the case where a corresponding user has watched multiple movies, it may be a method of recommending items that have a high similarity to the backgrounds, characters, and genres of the watched movies, and since this content-based filtering method compares only the features between items, instead of comparing similarity between users, it may be used in a content providing system in the early stage of learning with few users.

On the other hand, the collaborative filtering method may be a method of estimating empty information (null) for a corresponding item through other users using a link between a user and an item, based on records of users with similar tendencies, and using the same for recommendation. For example, it may be a method of analyzing simple information related to users and items, and recommending items that users having tendencies similar to that of the user have previously liked. For example, if many viewers who watched the drama "House" watch the movie "Home", the movie "Home" may be recommended to all users who watched the drama "House".

Although the above methods may be used to recommend content in various fields such as news, movies, music, and videos to users, current machine learning-based recommendation methods focus on recommending a single piece of content. Therefore, a method of recommending a single piece of content to a user may have limitations in reflecting the user's interest. For example, in the case of economic content that requires prior knowledge, unfamiliar terms (e.g., exchange traded fund (ETF), short selling, private equity fund, simultaneous quote, and home trading system (HTS)) may make it difficult for users who come in contact with the economic content for the first time to understand the news thereof. Therefore, if the content is recommended in the form of a stepwise content sequence, users may more easily understand and use the content.

Therefore, in providing recommended content, it is necessary to consider a method of providing a plurality of pieces of content instead of a single piece of content. For example, there may be a method of sorting the items used for learning in output layers of a deep-learning network from the maximum value (1) to the minimum value (0) through a softmax function and then selecting the top K items as recommended items. Another example may be a method of selecting recommended items, based on similarity, in which, if a final result is in the form of a vector, the distance between the vector and the item is measured and K recommended items are selected in order of close distance.

In providing a plurality of pieces of content as described above, if content is recommended in consideration of the correlation between items while adding new items to the items used for learning, it is possible to increase the user interest, as well as providing richer content to the user.

In addition, since the recommended content provided in the form of a sequence is provided in the form of an n-dimensional bundle of sequence, if user feedback on each content is also considered, the user may receive more personalized recommended content.

Therefore, according to various embodiments, recommended content may be provided in the form of an n-dimensional bundle of sequence. For example, a method of providing recommended content, which may generate a recommended content sequence in consideration of the correlation between respective pieces of content in addition to content in a new field and also reflect user feedback on the content in the content sequence, will be described in detail below.

According to various embodiments, the server 108 may cluster a large amount of content using a machine learning algorithm (or model) and determine recommended content to be provided to the client 101 from the clustered content. According to an embodiment, the server 108 may classify a large amount of content into a plurality of content categories through clustering. Here, a plurality of pieces of content belonging to each content category may be referred to as a content pool.

According to various embodiments, the server 108 may provide (or recommend) a bundle of content sequences to the client 101 through a network. According to an embodiment, the server 108 may provide content in each content category in the form of a sequence. In addition, the server 108 may provide some content sequences among a plurality of content sequences, and the some content sequences may indicate pieces of content that are correlated with each other in at least one content category. Here, some content sequences may include content sequences of a corresponding content category or content sequences according to a combination of two or more content categories, and thus may be referred to as a bundle of content sequences.

According to various embodiments, the server 108 may learn content-related user information in relation to determining recommended content to be provided to the client 101. According to an embodiment, the server 108 may receive user feedback as a response to transmission of a bundle of content sequences to the client 101. Here, the content-related user information may include user feedback such as user selection, viewing history, ratings, and reviews for recommended content.

Accordingly, in the case where learning of user information required to provide recommended content is performed, the some content sequences provided to the client 101 may be determined by reflecting user feedback, for example, user preferences. If a personalization algorithm is combined when providing a recommended content service as described above, it may be possible to provide recommended content sequences that more accurately targets users' interests.

According to various embodiments, the client 101 may receive a bundle of content sequences from the server 108 through a network. Accordingly, the client 101 may sort and output the content sequences in the bundle in response to reception of the bundle of content sequences. According to an embodiment, the client 101 may determine a content sequence for providing a recommendation according to user preferences from among the content sequences in the bundle and provide a final recommended content sequence. For example, the client 101 may determine and sort the final recommended content sequence according to various criteria such as chronological order, popularity order, comment order, and editing order by reflecting user preferences.

According to an embodiment, the client 101 may provide the final recommended content sequence to the user and, for example, may provide the final recommended content sequence in various ways such as displaying the final recommended content sequence on a screen of the electronic device 101.

According to an embodiment, the client 101 may recommend the final recommended content sequence to the user and obtain user feedback on content belonging to the final recommended content sequence. For example, the user feedback may include all information related to the history of using the content, such as the user's history of viewing at least one piece of content belonging to the final recommended content sequence, and a user's selection, rating, and review for the recommended content.

According to an embodiment, the client 101 may transmit the user feedback to the server 108, and accordingly, the server 108 may collect user feedback from a plurality of users. According to an embodiment, the server 108 may perform learning using the user feedback to determine recommended content for each user in the future. Therefore, the server 108 may accurately predict and recommend a recommended content sequence for each user if the user feedback is collected enough to perform learning.

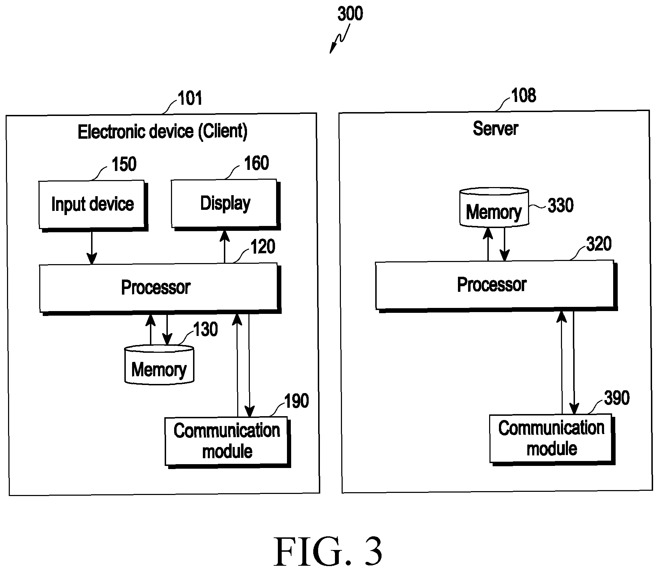

FIG. 3 is an internal block diagram of an electronic device and a server according to various embodiments.

Referring to FIG. 3, an electronic device 101 (e.g., the electronic device 101 in FIG. 1 and the client 101 in FIG. 2) according to various embodiments may be a device that provides a recommended content sequence based on user-related data. The electronic device 101 may include a communication module 190 (e.g., the communication module 190 in FIG. 1) for communicating with a server 108 (e.g., the server 108 in FIG. 1 and the server 108 in FIG. 2), a processor 120 (e.g., the processor 120 in FIG. 1) operatively connected to the communication module 190, and a memory 130 (e.g., the memory 130 in FIG. 1) operatively connected to the communication module 190 and the processor 120. In addition, the electronic device 101 may include an input device 150 (e.g., the input device 150 in FIG. 1) and a display 160 (e.g., the display device 160 in FIG. 1). Here, not all elements shown in FIG. 3 are essential elements of the electronic device 101, and the electronic device 101 may be implemented with more or fewer elements than those shown in FIG. 3.

According to various embodiments, the input device 150 is for receiving information about at least one piece of content of the recommended content sequence from the user, and user feedback may be received through the input device 150. For example, the user may input a variety of data on at least one piece of content of the recommended content sequence through the input device 150.

According to various embodiments, the display 160 may output a user interface for providing a user-related recommended content sequence. For example, the display 160 may output a final recommended content sequence reflecting user tendencies when an application (e.g., the application 146 in FIG. 1) for outputting content is executed.

According to various embodiments, the processor 120 may process data according to user input when outputting a recommended content sequence in real time in relation to the user. For example, processor 120 may transmit user feedback to the server 108 using the communication module 190.

According to various embodiments, an electronic device 101 may include a communication module 190 configured to communicate with a server 108, a display 160, and at least one processor 120 operatively connected to the communication module 190 and the display 160, and the at least one processor may be configured to receive, from the server 108, at least a portion of a plurality of content sequences representing interrelated content in at least one content category, sort the at least a portion of content sequences, based on user tendencies, to display the same on the display 160, and obtain user feedback on content in the content sequences.

According to various embodiments, when the electronic device is in an on-device state, the at least one processor may be configured to re-sort the at least a portion of content sequences to which the user feedback is applied in real time.

According to various embodiments, when the electronic device is not in an on-device state, the at least one processor may provide the user feedback to the server so as to be used for recombination of content sequences.

Meanwhile, according to various embodiments, the server 108 may include a processor 320, a memory 330, and a communication module 390 for communicating with at least one electronic device (e.g., the electronic device 101 of the user). The server 108 may be implemented in the form of a mobile device such as the electronic device 101, and may be implemented in the form of a cloud server or integrated platform in a wired or wireless network.

According to various embodiments, the processor 320 may perform learning to provide a recommended content sequence for each user using a learning model (or learning algorithm). A configuration unit for learning may be implemented as a software module or manufactured in the form of at least one hardware chip and then mounted to the server 108. For example, the configuration unit for learning may be manufactured in the form of a hardware chip dedicated to artificial intelligence or may be manufactured and mounted as a part of the processor 320.

According to various embodiments, the memory 330 may be electrically connected to the processor 320 and may store information related to providing a recommended content sequence for each user. For example, the memory 330 may store a learning algorithm for providing recommended content in the form of a sequence for each user. Here, the learning algorithm may include, for example, supervised learning, unsupervised learning, semi-supervised learning, or reinforcement learning, but is not limited to the examples described above. The artificial intelligence model may include a plurality of artificial neural network layers. Artificial neural networks may be one of deep neural networks (DNNs), convolutional neural networks (CNNs), recurrent neural networks (RNNs), restricted Boltzmann machines (RBMs), deep belief networks (DBNs), bidirectional recurrent deep neural networks (BRDNNs), deep reinforcement learning, or a combination of two or more of the above, but are not limited to the examples described above. The artificial intelligence model may include software structures in addition or as alternatives to the hardware structures.

According to various embodiments, the processor 320 may generate a content pool for each content category by clustering content. Here, the content pool for each content category may be configured by classifying a plurality of pieces of content according to content topics (or content fields) through clustering. For example, the processor 320 may classify a plurality of pieces of content into a predetermined number of categories through clustering, thereby configuring content pools for respective content categories.

In addition, the processor 320 may adjust the number of pieces of content in the content pool for each content category, based on the content use histories of users, such as the frequency of clicks by users and the order of time thereof, for each piece of content in each content pool.

For example, the processor 320 may delete content from the content pool if the corresponding content is old or unpopular based on the content use history and thus adjust the number of pieces of content belonging to each content category. The content for each content category may be big data having large-amount and multi-dimensional characteristics.

Accordingly, the processor 320 may identify the correlation between content in each content category and generate a content sequence representing a predetermined number of pieces of content as a recommended content sequence. At this time, the processor 320 may generate one or more content sequences. For example, the processor 320 may provide the electronic device 101 with a bundle of content sequences including a content sequence of one content category or a content sequence obtained from a combination of two or more content categories.

According to various embodiments, the processor 320 may obtain user feedback in response to the provision of the bundle of content sequences. According to an embodiment, the processor 320 may receive user feedback from a plurality of clients (or a plurality of electronic devices) using the communication module 390. The processor 320 may learn user feedback for each of a plurality of clients in real time and perform clustering for each content category on the learned data. The data clustered for each content category may be constructed in the form of a database using the memory 330. Accordingly, the processor 320 may recommend a content sequence reflecting user feedback in the future. Therefore, since feedback on the sequence sorting method of the corresponding content is collected from users, a delivery method (e.g., a sequence sorting form) of the recommended content to be delivered to the user may be readjusted by the feedback of users using the recommendation service, thereby improving delivery of recommendations.

According to various embodiments, a server 108 may include a communication module 390 configured to communicate with at least one external electronic device (e.g., the electronic device 101) and at least one processor 320 operatively connected to the communication module 390, and the at least one processor 320 may be configured to obtain information related to transition between content for each content category, generate a plurality of content sequences representing interrelated content in at least one content category, based on the information related to transition, and provide the external electronic device with at least a portion of the plurality of content sequences used to provide recommended content sequences in the at least one external electronic device.

According to various embodiments, the plurality of content sequences may include at least one of a first content sequence in a first content category or a second content sequence in a second content category.

According to various embodiments, the at least one processor may be configured to identify common content from among the first content sequence in the first content category and the second content sequence in the second content category and generate a third content sequence by combining the first content sequence and the second content sequence, based on the common content.

According to various embodiments, the plurality of content sequences may further include the third content sequence.

According to various embodiments, the at least one processor may be configured to generate the plurality of content sequences, based on a threshold using the information related to transition.

According to various embodiments, the at least one processor may be configured to exclude content equal to or less than the threshold from the interrelated content in the at least one content category and generate the plurality of content sequences, based on the remaining content excluding the content equal to or less than the threshold.

According to various embodiments, the at least one processor may be configured to sequentially sort the plurality of content sequences, based on the total sum of the information related to transition and select at least a portion of the plurality of sorted content sequences in the order of high total sum.

According to various embodiments, the information related to transition may include a transition probability matrix.

According to various embodiments, the at least one processor may be configured to cluster a plurality of pieces of content data and configure content for each content category through the clustering.

According to various embodiments, the at least one processor may be configured to obtain, in response to providing at least a portion of the plurality of content sequences to the external electronic device, user feedback on content in a content sequence corresponding to the at least some from the external electronic device, and reflect the obtained user feedback on the content for each content category.

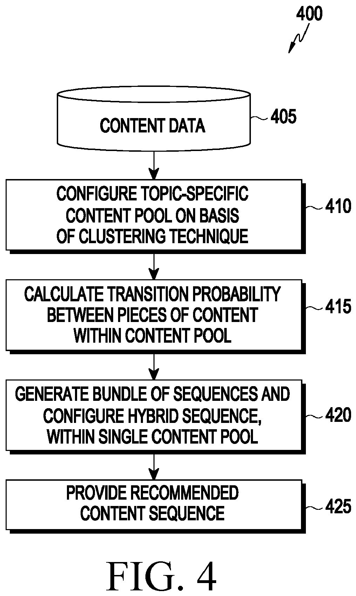

FIG. 4 is a flowchart 400 illustrating an operation of providing recommended content according to various embodiments.

Referring to FIG. 4, the server 108 may store a large amount of content data 405 and, in operation 410, configure topic-specific content pools, based on a clustering technique. According to an embodiment, the server 108 may digitize each piece of content data, based on embedding, and express the same in a vector space. According to an embodiment, each content data may have a vector format shown in Table 1 below through embedding. Embedding indicates conversion into vectors based on words or sentences such as title, text, and description of content, and a natural-language processing method may be used as one of the conversion techniques.

**[Table 1]**

| Content | Users | Read_timestamp | Vector | Feedback |
|---|---|---|---|---|
| No. 1 in most confirmed cases | Kim Samsung | 2020-09-10 | [0.25, 0.05, 0.35, 0.77, ..., 0.1] | 5 |
| | | 16:00:00 123 | | |
| Coronavirus vaccine company stock price | Park Samsung | 2020-09-18 | [0.75, 0.11, 0.55, 0.37, ..., 0.5] | 3 |
| | | 13:12:22 055 | | |
| ... | ... | ... | ... | ... |

Referring to Table 1 above, the server 108 may store and manage content data in the form shown in Table 1 above and, if user feedback on the content in the recommended content sequence is collected in the future, reflect the collected user feedback to the corresponding content in the feedback field. Here, in the state before user feedback is collected, initial values of all the feedback fields may be configured as "1".

The server 108 may calculate distances between respective pieces of content using the vectors of the content shown in Table 1 and classify the large amount of content according to topics (or categories) through a clustering technique. In addition, if it is difficult to classify content into one specific topic, for example, if content belongs to the boundary between two or more categories, the content may be regarded as belonging to all of the two or more categories. Hereinafter, the content classified by categories as described above may be referred to as a content pool, a cluster, or clustering.

At this time, the server 108 may exclude content that satisfies at least one condition, among the content classified by categories, from the corresponding category. For example, conditions for determining content to be excluded may vary, such as content in which "Read _timestamp" indicating that a performed period of time elapsed is recorded with reference to Table 1 above, content that falls below a threshold (e.g., content having a low preference) when the content in the corresponding category is listed according to a certain criterion, and content that has a negative number greater than or equal to a specified value when the feedback field values in Table 1 are averaged for each content, but are not limited thereto.

After configuring the topic-specific content pools based on the clustering technique as described above, the server 108 may calculate transition probabilities between the content in the content pool in operation 415. The server 108 may recognize information in a user field and information in a "Read_timestamp" field for the content in the content pool configured by excluding the content corresponding to at least one condition with reference to Table 1 and, based on this, calculate preliminary transition probabilities between the content. Accordingly, the server 108 may generate a bundle of sequences in a single content pool or configure a hybrid sequence using the calculated transition probability values in operation 420. In operation 425, the server 108 may provide the bundle of recommended content sequences to the electronic device 101.

For example, the server 108 may configure a threshold value and exclude content having a very low transition probability or little use history from the content. Accordingly, the server 108 may configure a content sequence from among the remaining content, excluding content below a threshold value from the corresponding content pool. In this case, the length of the content sequence may be adjustable. For example, the length of the content sequence may be determined based on user feedback. The server 108 may adjust the length of the content sequence such that the length of the content sequence becomes longer as the content category has a higher user feedback.

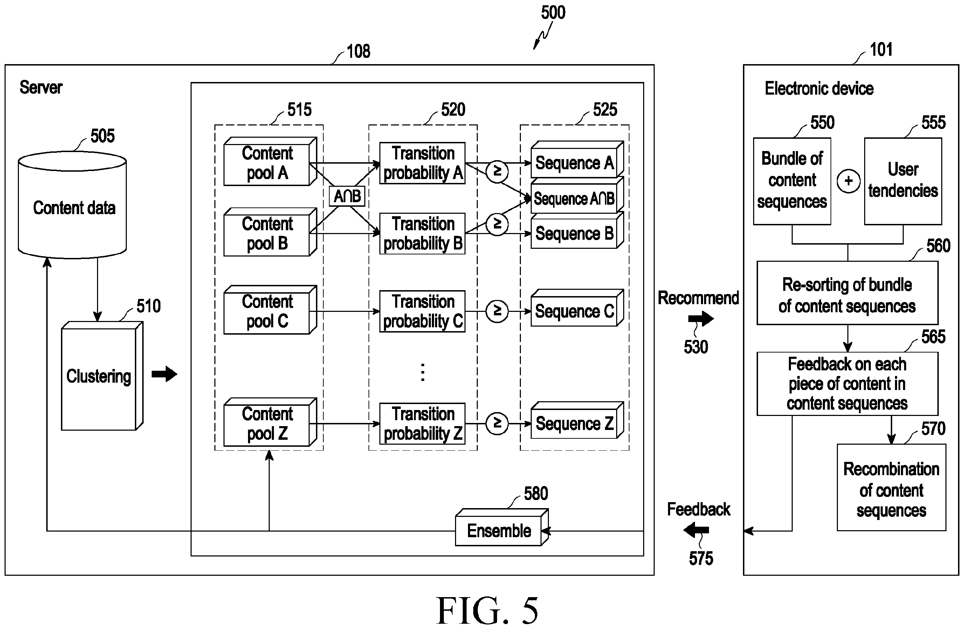

FIG. 5 is a diagram 500 illustrating an operation of providing recommended content in an electronic device and a server according to various embodiments.

Referring to FIG. 5, the server 108 may generate content pools (e.g., content pool A, content pool B, content pool C, ..., and content pool Z) 515 corresponding to a plurality of content categories through clustering 510 of content data 505. According to an embodiment, the server 108 may perform clustering using a clustering algorithm. For example, a two-dimensional matrix for the content may be obtained using upper features (or higher principal components), and the two-dimensional matrix represents the distribution of content, and a plurality of clusters, that is, a plurality of content pools may be obtained from a distribution chart of respective pieces of content. The plurality of content pools may correspond to respective content categories.

For example, since the content pool is obtained by grouping content with high similarity, this similarity may be for a specific category (or a specific topic). Accordingly, the content data projected on the two-dimensional matrix may be in the form of gathering content with high similarity for each content category.

Accordingly, the server 108 may calculate distances between respective pieces of content as shown in the distribution chart for a plurality of pieces of content to configure a content pool for each content category and pre-store the same in a database (e.g., the memory 330). Thereafter, if a request for a recommended content sequence is received from the electronic device 101, the server 108 may provide a recommended content sequence using the content in the content pool for each content category in response to the request. Alternatively, the server 108 may pre-configure a recommended content sequence and, if a request for a recommended content sequence is received, provide the recommended content sequence pre-configured for the user of the electronic device 101 to the electronic device 101. Alternatively, if user feedback is received in the state in which the recommended content sequence is pre-configured by the server 108, the pre-configured recommended content sequence may be updated based on the user feedback and provided to the electronic device 101.

According to various embodiments, the server 108 may recommend a content sequence representing different types of content and determine content to be recommended by considering a correlation between the content in the content sequence. According to an embodiment, the server 108 may identify a correlation between respective pieces of content, based on features of the content, and generate a content sequence, based on the correlation. As described above, even the content belonging to different categories may constitute a recommended content sequence using the correlation when creating the content sequence, and thus it is possible to provide recommended content with a storyline to the user.

According to an embodiment, the server 108 may obtain information related to transition between content for each content category in order to identify the correlation between the content. For example, there may be provided, as a method of obtaining information related to transition, a method of configuring movement between content in the content pool (e.g., content pool A, content pool B, content pool C, ..., and content pool Z) 515 as a transition probability matrix. Here, the transition probability matrix may be configured based on content use information by users (e.g., when a user clicks on content). For example, the server 108 may obtain a probability of transition from the state before the user uses content to the state after the content is used for each content.

For example, the server 108 may calculate transition probabilities for respective pieces of content in the content pool A, respective pieces of content in the content pool B, or common pieces of content in the content pool A and the content pool B to obtain a transition probability A and a transition probability B. In the same way, the server 108 may obtain a transition probability C for respective pieces of content in the content pool C and obtain a transition probability Z for respective pieces of content in the content pool A.

As described above, the server 108 may obtain a transition probability matrix (e.g., transition probability A, transition probability B, transition probability C, ..., transition probability Z) 520 for the respective content pools. For example, since the transition probability is generally calculated based on the history of users using the content, the content is also more likely to be sorted in the order of time. However, the server 108 may configure criteria for calculating the transition probability of the content such that the content is to be sorted according to various criteria, in addition to the order of time.

Even if the server 108 is able to process a large amount of content data, it is possible to increase processing efficiency by configuring a recommended content sequence from among the content that satisfies a predetermined condition, instead of obtaining transition probabilities for all content in each content category. To this end, the server 108 may use a threshold as a condition for filtering content that satisfies a predetermined condition. For example, since the transition probability may be expressed as a numerical value, only content having a transition probability greater than or equal to a threshold value may be selected as target content necessary for configuring a content sequence.

Since the content sequence configured by applying a threshold as described above reflects a weight while ensuring the flow of refined content in the transition probability matrix, which is listed in the order of time, the content with low recognition may be highly likely to be excluded from recommendation in configuring the recommended content sequence. Accordingly, the content sequence recommendation based on the transition probability in the server 108 may guarantee quality improvement of the recommended content.

Meanwhile, after obtaining transition probabilities (e.g., transition probability A, transition probability B, transition probability C, .., and transition probability Z) 520 between the content in the respective content categories, the server 108, based on the same, may generate a plurality of content sequences 525. According to an embodiment, the server 108 may generate a content sequence (e.g., sequence AΠB) representing a combination of content in different content categories, as well as content sequences (e.g., sequence A, sequence B, sequence C, .., and sequence Z) representing content in the respective content categories.

According to an embodiment, the server 108 may generate a plurality of content sequences, based on content closest to the user, by performing random sampling. For example, the server 108 may quantify the content through embedding to express the content in a vector space and select the content closest to the user tendencies through this. The server 108 may sort the plurality of content sequences generated through random sampling based on the transition probability matrix. Since there are various types of content belonging to the content category, the server 108 may determine a sequence sorting form indicating a method of sorting the content.

For example, it may be assumed that there are five pieces of content (e.g., {A, B, C, D, E}) in a content pool clustered with a specific topic. Here, the content pool clustered with a specific topic may be referred to as a first content category. The server 108 may exclude content whose transition probability between content is equal to or less than a threshold value in order to use only some content, instead of all of the five pieces of content, as objects constituting a recommended content sequence. The server 108 may perform sampling on the remaining content (e.g., {A, C, E}), excluding the content equal to or less than a threshold. At this time, when the content sequence is configured two-dimensionally, a total of 6 content sequences (e.g. {{A,C},{A,E},{C,E},{C,A},{E,A}, {E, C}}) may be configured. In addition, in the case of sorting the content sequences in the order of highest transition probability and configuring only the top 50% thereof as a recommended content sequence, the server 108 may select only three content sequences (e.g., { {A,C}, {A,E}, {C,E}}), i.e., half of the content sequences, thereby configuring a recommended content sequence (or recommended item).

According to various embodiments, although a recommended content sequence representing a variety of interrelated content for various topics may be generated by configuring a content sequence corresponding to each content category as described above, a content sequence corresponding to a combination of the various topics may also be generated. A method of configuring a recommended content sequence, based on transition probabilities between content in two or more content categories, may be as follows.

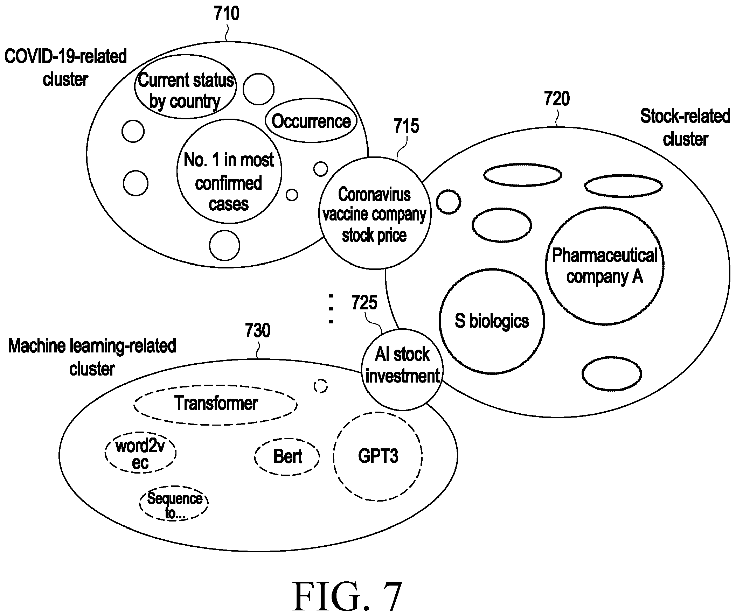

For example, the server 108 may generate a content sequence (e.g., sequence AΠB) representing a combination of content in different content categories. A method using such a combination of content categories may be referred to as a hybrid sequence method. In the case of content in different content categories, content that is close to each other may be similar content and content that is farthest away from each other may be content that differs greatly in a two-dimensional matrix. As described above, as the distance increases, the content may be located on the boundary between two or more content categories, and if the transition probability property of the corresponding content is high, the content may be identified as common content. Accordingly, the server 108 may configure a recommended content sequence from among the content in two or more content categories based on the common content. A detailed description of the hybrid sequence method will be described later with reference to FIG. 7.

According to various embodiments, after generating a plurality of content sequences 525, the server 108 may recommend (530) at least a portion of the plurality of content sequences 525 to the electronic device 101 in response to a request from the electronic device 101 (e.g., when an application is executed). The server 108 may provide only a predetermined number of content sequences as recommended content sequences in the state in which Z content sequences 525 are generated. For example, the content sequences may be sorted in the order of highest transition probability, and only the content sequences that are equal to or higher than a predetermined upper threshold % may be recommended (530). According to an embodiment, the threshold % for providing a bundle including a predetermined number of content sequences may be determined in advance by the server 108 or the electronic device 101, and the threshold may be determined based on various conditions.

Meanwhile, the electronic device 101 may operate as follows in response to the recommendation (530) of the recommended content sequences.

Referring to FIG. 5, upon receiving a bundle of content sequences 550 from the server 108, the electronic device 101 may re-sort (560) the bundle of content sequences, based on user tendencies 555. According to an embodiment, the electronic device 101 may determine whether to display all of the recommended content sequences 550 or determine a display method in the case of displaying some thereof. To this end, the electronic device 101 may use the user tendencies 555. In this case, the electronic device 101 may determine to sort the recommended content sequences by considering the user context as well as the pre-stored user tendencies 555.

As described above, the electronic device 101 may sort and display the content in the recommended content sequences according to a user-preferred sorting method, and the electronic device 101 may obtain user feedback 565 on each content in the recommended content sequences.

The user feedback 565 on each content in the recommended content sequences may be processed depending on the case where the electronic device 101 is in an on-device state and the case where the electronic device 101 is not in the on-device state.

According to an embodiment, when the electronic device 101 is in the on-device state, the user feedback may be reflected in the recommended content sequences in real time, and the content sequences may be recombined (570). Since real-time online feedback is possible when the electronic device 101 is in the on-device state, upon receiving a bundle of content sequences from the server 108, the electronic device 101 may re-sort the content sequences by reflecting the user tendencies 550, and sort and display final recommended content sequences through recombination of the content sequences, based on user feedback input in real time. In the case where online feedback is possible as described above, sorting and editing of recommended content may be dynamically changed depending on the user's situation.

Meanwhile, an operation of changing the sorting order of the recommended content sequences to a user-preferred sorting method in real time may be referred to as a content personalization operation, and the electronic device 101 may perform resorting and recombination using an attention technique to the content sequences and pre-stored user tendencies. According to an embodiment, the electronic device 101 in the on-device state may re-sort or re-combine the recommended content sequences, based on an attention technique (e.g., query, key, or value form) with respect to pre-stored user tendencies (e.g., {vector: value}).

For example, the electronic device 101 may pre-store user tendencies in the form of a dictionary (e.g., {{vector 1: value1}, {vector2: value2}, ..., {vectorn: valuen}}). Since user tendencies are able to be expressed as "values", the higher the positive value, the higher the possibility of being configured as primary content in the content sequence, and as the "value" is closer to 0, it may indicate high possibility of being excluded from the content sequence. Therefore, if the electronic device 101 reflects the digitized user tendencies to the bundle of recommended content sequences (e.g., {{A,C}, {A,E}, { C,E}}), the bundle of content sequences may be expressed as scalar values (e.g., {{0.9}, {0.75}, {0.35}}). Accordingly, the electronic device 101 may determine a content sequence (e.g., {A, C}) that has the highest value, which is expressed as a scalar value, from among the bundle of content sequences. That is, a content sequence having the highest scalar value may have a high priority in configuring the final recommended content sequences.

Meanwhile, when the electronic device 101 is not in the on-device state, user feedback 565 for each content in the recommended content sequences may be transmitted (575) to the server 108. According to an embodiment, when the electronic device 101 is not in the on-device state, user feedback may be processed by the server 108. Accordingly, the server 108 may collect user feedback from a plurality of users and ensemble (580) the user feedback to reflect the same on the content data 505 itself or each content pool. A variety of feedback obtained from various users described above may affect the distribution of the respective pieces of content in the content pool 515 of the server 108 as a representative average value through ensemble 580 averaging.

According to an embodiment, the electronic device 101 may transmit, to the server 108, the user tendencies 555 stored in a dictionary form in the electronic device 101 along with the user feedback on the content in the recommended content sequences. Here, the server 108 may periodically or aperiodically collect the user tendencies 555 through communication with the electronic device 101. The server 108 may recommend content sequences suitable for each user by collecting the user tendencies 555 as well as the user feedback described above.

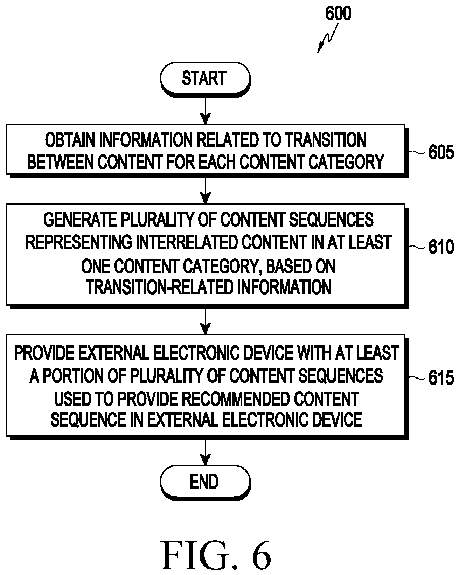

FIG. 6 is a flowchart 600 illustrating an operation in a server for providing recommended content according to various embodiments. An operation method may include operations 605 to 615. Each step/operation of the operation method may be performed by at least one of at least one processor (e.g., 320) of an electronic device (e.g., the server 108 in FIG. 1 or the server 108 in FIG. 3). In an embodiment, at least one of operations 605 to 615 may be omitted, the sequence of some operations may vary, or another operation may be added thereto. A server in FIG. 6 may also be referred to as an electronic device, and an external electronic device may be understood to represent a client.

In FIG. 6, it is assumed that the server 108 clustered a large amount of content data in advance and generated a content pool for each content category. Here, the content pool for each content category may be configured by classifying a plurality of pieces of content by clustering according to content topics (or content fields).

According to various embodiments, in operation 605, the server 108 may obtain information related to transition between content for each content category.

In operation 610, the server 108 may generate a plurality of content sequences representing interrelated content in at least one content category, based on the transition-related information.

According to an embodiment, the plurality of content sequences may include at least one of a first content sequence of a first content category and a second content sequence of a second content category.

According to an embodiment, the generating of the plurality of content sequences may include identifying common content from among the first content sequence in the first content category and the second content sequence in the second content category, generating a third content sequence by combining the first content sequence and the second content sequence, based on the common content, and generating the plurality of content sequences including the third content sequence.

For example, the server 108 may generate a content sequence (e.g., sequence AΠB in FIG. 5) representing a combination of respective pieces of content in different content categories, as well as a content sequence (e.g., sequence A, sequence B, sequence C, ..., sequence Z in FIG. 5) representing content in the respective content categories.

According to an embodiment, the generating of the plurality of content sequences may include generating the plurality of content sequences, based on a threshold using the information related to transition.

According to an embodiment, the generating of the plurality of content sequences may include excluding content equal to or less than the threshold from the interrelated content in the at least one content category and generating the plurality of content sequences, based on the remaining content excluding the content equal to or less than the threshold.

For example, the server 108 may calculate preliminary transition probabilities between the content and, if content in a specific content category is old or unpopular based on the calculated transition probabilities, delete the corresponding content from the category, thereby adjusting the number of pieces of content belonging to each content category.

In operation 615, the server 108 may provide the external electronic device with at least a portion of the plurality of content sequences used to provide recommended content in the external electronic device (e.g., the electronic device 101).

According to an embodiment, the method may further include sequentially sorting the plurality of content sequences, based on the total sum of the information related to transition and selecting at least a portion of the plurality of sorted content sequences in the order of high total sum.

According to an embodiment, the method may further include clustering a plurality of pieces of content data, configuring content for each content category through the clustering, obtaining, in response to providing at least some of the plurality of content sequences to the external electronic device, user feedback on content in a content sequence corresponding to the at least some from the external electronic device, and reflecting the obtained user feedback on the content for each content category.

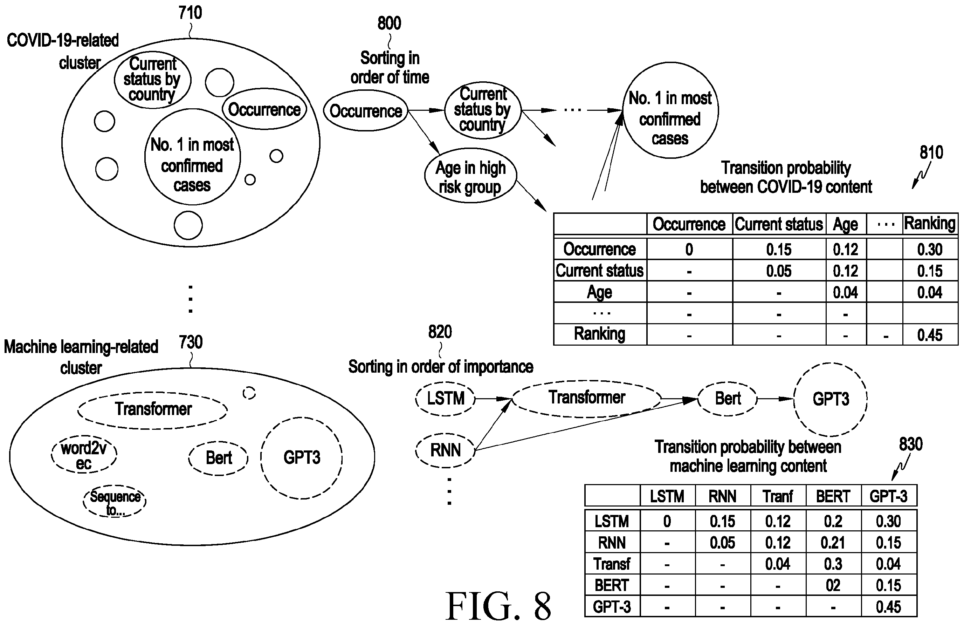

Hereinafter, reference may be made to FIGS. 7 and 8 for a detailed description of a method of generating a content sequence representing interrelated content in at least one content category. FIG. 7 is an exemplary diagram illustrating a method of combining content belonging to different content categories according to various embodiments. FIG. 8 is an exemplary diagram illustrating a method of calculating a transition probability between content in at least one content category according to various embodiments.

Referring to FIGS. 7 and 8, correlations between content belonging to various categories may be found, thereby identifying interrelated content. Although web content is described by way of example in FIGS. 7 and 8, the type of content used for classification of categories may not be limited thereto. For example, a variety of content such as web content provided through the Internet and multimedia content provided through a broadcasting network may be classified according to categories.

FIG. 7 illustrates a plurality of clusters (or content pools) corresponding to different categories. For example, content highly related to COVID-19 (e.g., content of No. 1 in the most confirmed cases, content of current status by country, occurrence content, ...) may be grouped into a COVID-19-related cluster 710. Similarly, a stock-related cluster 720 may include stock-related content (e.g., content of S biologics, content of pharmaceutical company A, short selling content, ETF content, ...), and a machine learning-related cluster 730 may include learning-related content (e.g., Transformer, GPT3, Bert, ...). In this case, the sizes of nodes representing the content in each cluster may be determined according to user interest. For example, the size of a node representing the content of No. 1 in the most confirmed cases in the COVID-19-related cluster 710 may indicate that the user has the highest interest.

As shown in FIGS. 7 and 8, a plurality of pieces of content may be included in each of a plurality of clusters, and the server 108 may generate content sequences using the content in the respective clusters.

For example, as shown in FIG. 8, the server 108 may generate content sequences for each of a plurality of clusters including the COVID-19-related cluster 710 and the machine learning-related cluster 730. For example, a content sequence 800 sorted in the order of time may be generated based on the transition probabilities 810 of the content in the COVID-19-related cluster 710. For example, a content sequence 820 sorted in the order of importance may be generated based on the transition probabilities 830 of the content in the machine learning-related cluster 730.

As described above, the server 108 may generate a plurality of content sequences listed in order of various criteria, such as in order of time, in order of importance, and in order of issuer, for a corresponding cluster. Accordingly, a plurality of content sequences representing interrelated content may be generated for one content category. For example, the server 108 may generate K independent content sequences for COVID-19-related cluster 710.

For category A, if a first sequence A-1 represents content listed in the order of time, if a second sequence A-2 represents content listed in the order of importance, and if a third sequence to a Kth sequence A-K respectively represent content listed in the order of various criteria, the server 108 may recommend some of the K content sequences, instead of recommending all of the K content sequences. For example, the server 108 may select top n content sequences as recommended content sequences when sorting the K content sequences, based on the total sum of transition probabilities therein. In this case, the number of pieces of content constituting the content sequence, that is, the length of the content sequence may be determined by user feedback.

The server 108 may recommend a plurality of content sequences for a single content category in the above manner and also recommend content sequences through a combination of different content categories. Referring to FIG. 7 to explain this in detail, the coronavirus vaccine company stock price content 715 may be located on the boundary between the COVID-19-related cluster 710 and the stock-related cluster 720 through clustering shown in FIG. 7. The coronavirus vaccine company stock price content 715 may correspond to content that is far from the content of No. 1 in the most confirmed cases, which is the center thereof, and as the content is farther as described above, it may be located on the boundary, and if a transition probability value of the coronavirus vaccine company stock price content 715 is high, it may be identified as common content between the COVID-19-related cluster 710 and the stock-related cluster 720. At this time, although a transition probability matrix generated in a single cluster is normalized such that the sum thereof is 1 based on the two-dimensional matrix axis, an exception may be configured such that the marginal distribution of the transition probability matrix is able to become 1 or more for common content located on the boundary. Similarly, if an AI stock investment content 725 is located on the boundary between the stock-related cluster 720 and the machine learning-related cluster 730, it may be regarded as belonging to both clusters 720 and 730.

For example, the server 108 may generate a content sequence (e.g., sequence AΠB in FIG. 5) representing a combination of content in different clusters (or categories), and the common content may be used for a combination between the two clusters. According to an embodiment, using a combination of two clusters among the plurality of clusters 710, 720, and 730 may be a hybrid sequence method that most precisely targets and recommends a content sequence corresponding to a user's preferred topic.

Hereinafter, a hybrid sequence method using a combination of the COVID-19-related cluster 710 and the stock-related cluster 720 may be described with reference to Tables 2 and 3.

**[Table 2]**

| Previous content | Current content | Transition probability (0~1) | Feedback |
|---|---|---|---|
| No. 1 in most confirmed cases | Coronavirus vaccine company stock price | 0.56 | 5 |
| Coronavirus vaccine company stock price | New cases of COVID | 0.01 | 3 |
| ... | ... | ... | ... |

**[Table 3]**

| Previous content | Current content | Transition probability (0~1) | Feedback |
|---|---|---|---|
| Pharmaceutical company A | Coronavirus vaccine company stock price | 0.22 | 2 |
| Coronavirus vaccine company stock price | Should I buy stocks now or not? | 0.61 | 5 |
| ... | ... | ... | ... |

Table 3 illustrates transition probabilities and feedback between content in the stock-related cluster 720. As shown in Tables 2 and 3 above, clusters may be associated using a common keyword (e.g., coronavirus vaccine company stock price).

As described above, according to an embodiment, the server 108 may identify correlations between keywords by analyzing web content in order to utilize them as contact points of the content belonging to different clusters (or categories). For example, a hybrid sequence capable of being generated based on the transition probability matrix may be configured in the order of content "No. 1 in the most confirmed cases" -> content "coronavirus vaccine company stock price" -> content "Should I buy stocks now or not?".

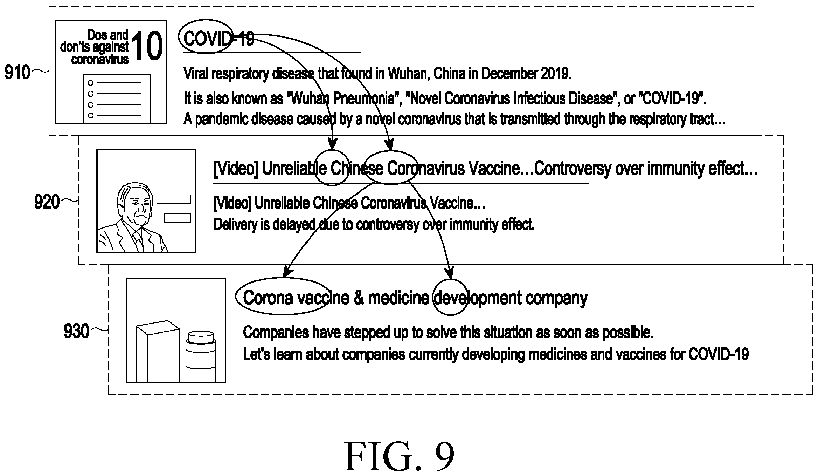

If a content sequence configured as described above is recommended, the electronic device 101 may sort and display the content sequence as shown in FIG. 9 according to a method preferred by the user.

FIG. 9 is a diagram illustrating a plurality of content sequences including interrelated content according to various embodiments.

According to various embodiments, if at least some of a plurality of content sequences representing interrelated content in at least one content category is received, a recommended content sequence indicating content 910, 920, and 930 may be displayed on the electronic device 101 as shown in FIG. 9.

For example, if a user has a tendency to be interested in the latest information when viewing coronavirus web content, the electronic device 101 may display a recommended content sequence indicating content 910, 920, and 930 sorted from newest to oldest by reflecting the user tendency.

As shown in FIG. 9, the electronic device 101 may recognize a user's tendency, and sort and display related content when displaying consecutive content. Accordingly, in the case of using content belonging to a cluster that requires preliminary knowledge, the user may experience high barriers to due to unfamiliar terms, whereas according to various embodiments, a content sequence representing content configured in stages as, for example, content "coronavirus" -> content "coronavirus vaccine company stock price" -> content "Should I buy stocks now or not?" -> content "stock jargon" may be provided to increase the user interest.

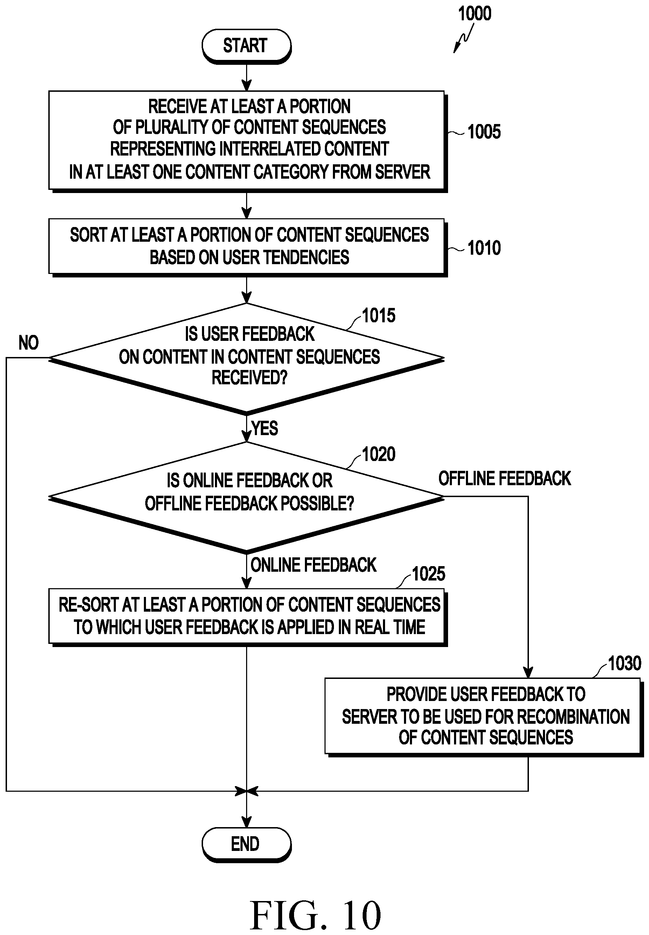

FIG. 10 is a flowchart 1000 illustrating an operation in an electronic device for providing recommended content reflecting user preferences according to various embodiments.

Referring to FIG. 10, in operation 1005, the electronic device 101 may receive at least a portion of a plurality of content sequences representing interrelated content in at least one content category from the server 108.

In operation 1010, the electronic device 101 may sort the at least a portion of content sequences, based on user tendencies. According to an embodiment, at least a portion of the plurality of content sequences may be interrelated content belonging to a plurality of categories recommended to the user of the electronic device 101. For example, when it is assumed that there are N content sequences generated by the server 108, all of the N content sequences may be provided to the electronic device 101, but K content sequences among the N content sequences may also be provided to the electronic device 101. Here, K content sequences are sequences of bundles of various combinations and may be referred to as recommended content sequences.

According to an embodiment, upon receiving K content sequences from the server 108, the electronic device 101 may sort the K content sequences, based on user tendencies. For example, the electronic device 101 may sort the content sequences in a user-preferred sorting manner.

In operation 1015, the electronic device 101 may identify whether or not user feedback on the content in the content sequences is received. For example, the electronic device 101 may obtain user feedback, such as user selection and comments, on at least one piece of the content in the content sequences.

In operation 1020, the electronic device 101 may identify whether online feedback or offline feedback is possible. If online feedback is possible, the electronic device 101 may re-sort the at least a portion of content sequences to which the user feedback is applied in real time in operation 1025. For example, when the electronic device 101 is in an on-device state (or is equipped with on-device artificial intelligence (AI)), the electronic device 101 itself may reflect the user feedback to the at least a portion of content sequences in real time and re-sort the same, instead of passing through the server 108.

On the other hand, if offline feedback is possible, the electronic device 101 may provide the user feedback to the server 108 so as to be used for recombination of the content sequences in operation 1030. For example, when the electronic device 101 is not in the on-device state, the electronic device 101 may transmit, to the server 108, the user feedback such that the user feedback may be reflected on all content possessed by the server 108. Accordingly, the server 108 may collect feedback for each of a plurality of users and ensemble the collected feedback for each user to average the same. The ensembled and averaged user feedback may be reflected on the content distribution in the server 108. Accordingly, the electronic device 101 may receive a recommendation from the server 108 for a content sequence on which the user feedback is reflected, and thus may provide the user with recommended content that corresponds to a combination of content in various fields and targets personal tendencies.

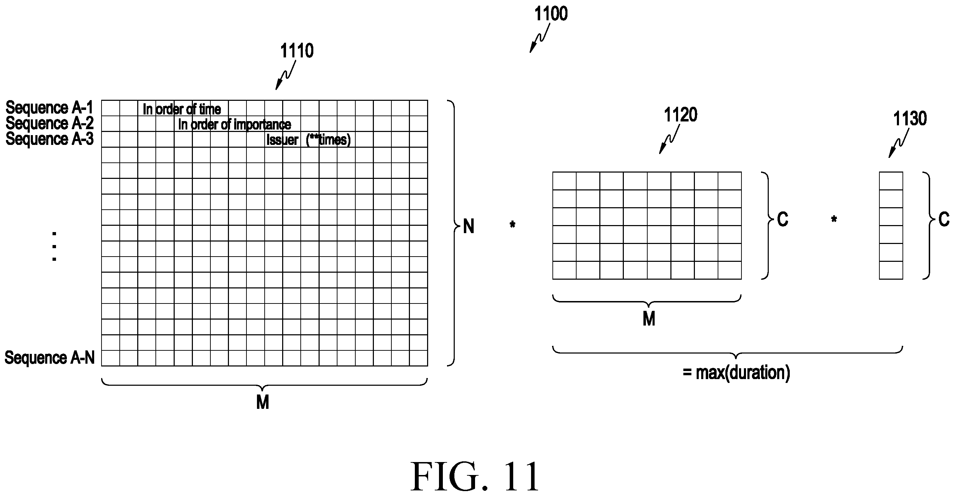

FIG. 11 is a diagram 1100 illustrating a method of providing a final recommended content sequence based on user tendencies from a plurality of content sequences provided from a server according to various embodiments.

Referring to FIG. 11, the electronic device 101 may obtain a plurality of content sequences from the server 108. For example, a first sequence A-1 may indicate content listed in the order of time, a second sequence A-2 may indicate content listed in the order of importance, and a third sequence A-3 may indicate content listed in the order of publisher. In addition, a third sequence A-4 to an Nth sequence A-N may represent content listed in the order of various criteria. N may represent the total number of content sequences, and M may represent the number of pieces of content included in a corresponding content sequence.

For example, in the case where the electronic device 101 receives N content sequences 1110 from the server 108, content sequences to be displayed to the user may be determined from among the N content sequences 1110. In other words, although the N content sequences 1110 provided from the server 108 are content sequences recommended by the server 108 to the electronic device 101, it may further increase user interest for the electronic device 101 to display a predetermined number of content sequences among the N content sequences provided, rather than displaying all of the N content sequences 1110 at once.

Accordingly, the electronic device 101 may apply user tendencies, for example, the manner in which the user consumes the content sequences (e.g., in order of time, in order of importance, in order of publisher, ...) and weights to the N content sequences 1110 to obtain a certain number of content sequences. For example, if user tendencies 1120 and a weight 1130 are applied to the N content sequences 1110, a personalized final recommended content sequences (e.g., max) may be obtained. Here, the weight 1130 may represent a vector value indicating how to apply and display weights for each content category.

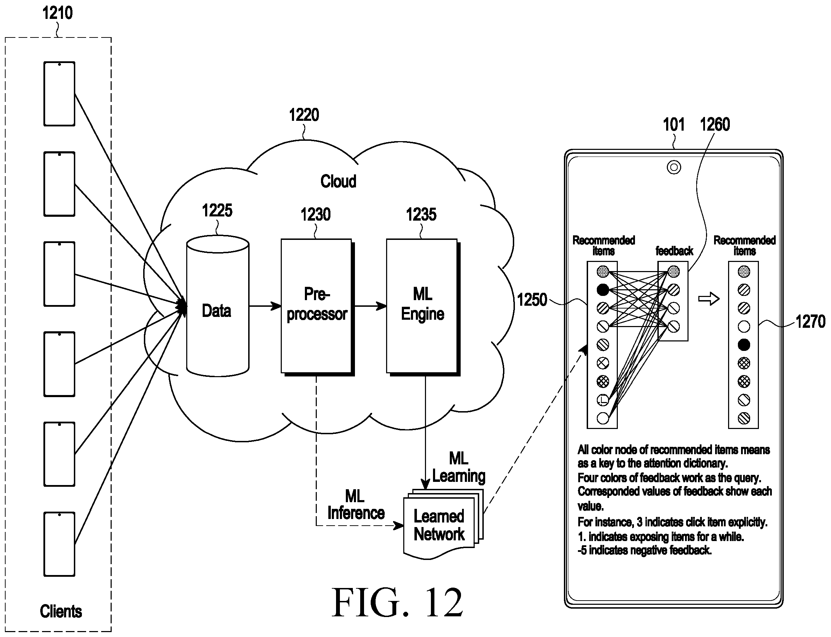

FIG. 12 is a diagram illustrating provision of a recommended content sequence reflecting user feedback in an electronic device according to various embodiments. In FIG. 12, the electronic device 101 may be in an on-device state, and the server 108 may be a cloud server.

FIG. 12 illustrates an example in which user feedback is applied in real time in the electronic device 101 so that recommended content sequence is re-sorted.

For example, a plurality of clients 1210 may receive a recommended content sequence from a cloud server 1220 and provide user feedback on the use of the content sequence to the cloud server 1220. The cloud server 1220 may collect the user-specific user feedback, store the same in a data storage 1225 (e.g., the memory 330) in the cloud 1220 server, pre-process data necessary for learning through a pre-processor 1230, and cause a machine learning (ML) engine 1235 to learn a learning model based on the data.

Meanwhile, unlike the plurality of clients 1210, since the learning model is preloaded when the electronic device 101 is in an on-device state, the electronic device 101 itself may apply user feedback 1260 on the recommended content sequence 1250 to the recommended content sequence in real time, instead of passing through the cloud server 1220.

According to an embodiment, the electronic device 101 may itself possess user tendencies in the form of a dictionary through on-device AI. For example, if the electronic device 101 possesses user tendencies in the form of a dictionary, such as {{vector1: value1}, {vector2: value2}, ..., {vectorn: valuen}}, the electronic device 101 may re-combine or re-sort the recommended content sequence using the recommended content sequence and attention technique. For example, since values according to the attention technique possessed by a personal user are applied to the recommended content sequence when the electronic device 101 is in the on-device state, personalization may be further strengthened even after the recommended content sequence related to the user of the electronic device 101 is received from the server 108.

According to an embodiment, a recommended content sequence 1270 re-sorted (or re-combined) by reflecting user feedback may be displayed on a screen of the electronic device 101. Since the re-sorted recommended content sequence 1270 is re-sorted by reflecting real-time user feedback based on the recommended content targeting the tendencies of the user of the electronic device 101, it is possible to make immediate interactions with the user, as well as realizing elaborate personalization, while enhancing efficiency in content recommendation.

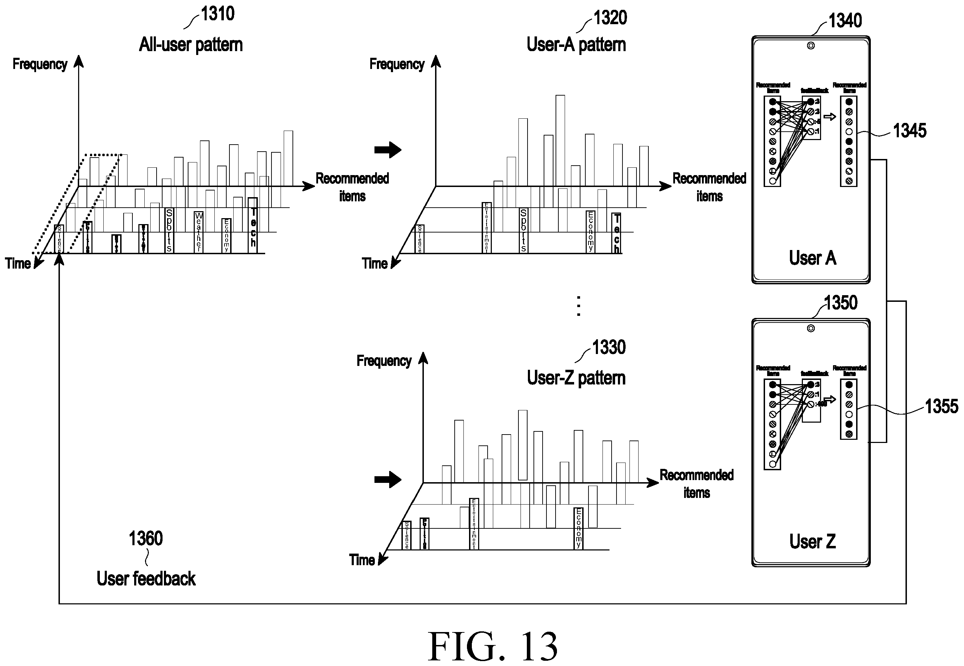

FIG. 13 is a diagram illustrating provision of a recommended content sequence for each of users according to various embodiments. In FIG. 13, the electronic device 1340 of user A and the electronic device 1350 of user Z are not in an on-device state, and in this case, user-specific feedback may be transmitted to the server 108 in an offline manner.

Referring to FIG. 13, in an all-user pattern 1310, a user-A pattern 1320, ..., and a user-Z pattern 1330 for each user (e.g., user A, ..., and user Z) may be obtained in different forms from among content belonging to respective content categories (e.g., science, politics, society, entertainment, sports, weather, economy, or technology).

For example, for user A, the server 108 may provide the electronic device 1340 of user A with content sequences including recommended items related to user A's preferences. Similarly, for user Z, the server 108 may provide the electronic device 1350 of user Z with content sequences including recommended items related to user Z's preferences.

As described above, the content sequences recommended by the server 108 may differ between respective users, and each electronic device 1340 or 1350 may also sort the content sequences by reflecting user tendencies previously possessed. Accordingly, the recommended content sequence 1345 displayed on a screen of the electronic device 1340 of user A may be different from the recommended content sequence 1355 displayed on a screen of the electronic device 1355 of user Z. Accordingly, feedback on the content use may differ between the users. Accordingly, a variety user-specific feedback 1360 described above may be periodically or aperiodically collected by the server 108.

According to an embodiment, the recommended content sequences generated based on various criteria may be combined and averaged in the server 108 through feedback 1360 for each user. For example, if positive feedback is received from users for recommended sequences of a first category, the server 108 may reinforce the recommended sequences sorted in the order of time. On the other hand, if negative feedback is received from users for some content in the recommended sequences belonging to the first category, some content on which negative feedback was received may be excluded from the recommended sequences in the future or put on the back burner.

In addition, a new content category may be added through user feedback 1360, and for example, if a science-related content category is added, content corresponding to the science-related content category may also be recommended to other users. Accordingly, in addition to the existing content fields, the content fields that may be provided to the users may be expanded through learning.

As described above, the user-specific feedback may be reflected on the distribution of content in each content category in the server 108. At this time, in order to change the configuration of the content in each content category, the user-specific feedback must be collected as much as possible for learning, and as learning progresses, recommended content sequences may be accurately predicted and recommended to each user.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A server comprising:
a communication module configured to communicate with at least one external electronic device; and
at least one processor operatively connected to the communication module,
wherein the at least one processor is configured to:
obtain information related to transition between content for each content category;
generate a plurality of content sequences representing interrelated content in at least one content category, based on the information related to transition; and
provide the external electronic device with at least a portion of the plurality of content sequences used to provide recommended content sequences in the at least one external electronic device.

2. The server of claim 1, wherein the plurality of content sequences comprises at least one of a first content sequence in a first content category or a second content sequence in a second content category.

3. The server of claim 2, wherein the at least one processor is configured to:
identify common content from among the first content sequence in the first content category and the second content sequence in the second content category;
generate a third content sequence by combining the first content sequence and the second content sequence, based on the common content; and
generate the plurality of content sequences comprising the third content sequence.

4. The server of claim 1, wherein the at least one processor is configured to generate the plurality of content sequences, based on a threshold using the information related to transition.

5. The server of claim 4, wherein the at least one processor is configured to:
exclude content equal to or less than the threshold from the interrelated content in the at least one content category; and
generate the plurality of content sequences, based on the remaining content excluding the content equal to or less than the threshold.

6. The server of claim 1, wherein the at least one processor is configured to:
sequentially sort the plurality of content sequences, based on the total sum of the information related to transition; and
select at least a portion of the plurality of sorted content sequences in the order of high total sum.

7. The server of claim 1, wherein the information related to transition comprises a transition probability matrix.

8. The server of claim 1, wherein the at least one processor is configured to:
cluster a plurality of pieces of content data; and
configure content for each content category through the clustering.

9. The server of claim 1, wherein the at least one processor is configured to:
obtain, in response to providing at least a portion of the plurality of content sequences to the external electronic device, user feedback on content in a content sequence corresponding to the at least a portion from the at least one external electronic device; and
reflect the obtained user feedback on the content for each content category.

10. A method for providing recommended content in a server, the method comprising:
obtaining information related to transition between content for each content category;
generating a plurality of content sequences representing interrelated content in at least one content category, based on the information related to transition; and
providing an external electronic device with at least a portion of the plurality of content sequences used to provide recommended content sequences in the external electronic device.

11. The method for providing recommended content of claim 10, wherein the plurality of content sequences comprises at least one of a first content sequence in a first content category or a second content sequence in a second content category.

12. The method for providing recommended content of claim 10, wherein the generating of the plurality of content sequences comprises:
identifying common content from among the first content sequence in the first content category and the second content sequence in the second content category;
generating a third content sequence by combining the first content sequence and the second content sequence, based on the common content; and
generating the plurality of content sequences comprising the third content sequence.

13. The method for providing recommended content of claim 10, wherein the generating of the plurality of content sequences comprises:
based on a threshold using the information related to transition, excluding content equal to or less than the threshold from the interrelated content in the at least one content category; and
generating the plurality of content sequences, based on the remaining content excluding the content equal to or less than the threshold.

14. The method for providing recommended content of claim 10, further comprising:
sequentially sorting the plurality of content sequences, based on the total sum of the information related to transition; and
selecting at least a portion of the plurality of sorted content sequences in the order of high total sum.

15. An electronic device comprising:
a communication module configured to communicate with a server;
a display; and
at least one processor operatively connected to the communication module and the display,
wherein the at least one processor is configured to:
receive, from the server, at least a portion of a plurality of content sequences representing interrelated content in at least one content category;
sort the at least a portion of content sequences, based on user tendencies, to display the same on the display; and
obtain user feedback on content in the content sequences.
